# EUROPEAN PATENT APPLICATION

(11) **EP 4 685 014 A1**
(43) Date of publication of application: **28.01.2026**
(21) Application number: 24774583.9
(22) Date of filing: 26.02.2024
(51) Int. Cl.: B60R 11/02, H05K 5/02

(54) **ON-BOARD DEVICE**

(30) Priority: 23.03.2023 JP 2023046809
(71) Applicant: JVCKenwood Corporation, Yokohama-shi, Kanagawa 2210022 (JP)
(72) Inventor: SUZUKI, Yasuhiro, Yokohama-shi, Kanagawa 221-0022 (JP)
(74) Representative: Pritzlaff, Stefanie Lydia
(86) International application number: PCT/JP2024/006746
(87) International publication number: WO 2024/195438

(57) **Abstract**

An in-vehicle device (91) includes an attachment portion (A3), a first housing (A1), a knob (A4), and a second housing (A2). The attachment portion (A3) has an attachment plate (A3a). The first housing (A1) rotatably supports the attachment portion (A3) around a single axis (ACL). The knob (A4) sandwiches the attachment portion (A3) between the knob and the first housing (A1) and prevents the attachment portion (A3) from rotating with respect to the first housing (A1). The second housing (A2) moves with respect to the first housing (A1) between a first position at which the knob (A4) is covered and a second position at which the knob (A4) is exposed.

## Description

### TECHNICAL FIELD

The present invention relates to an in-vehicle device.

### BACKGROUND

Patent Literature 1 describes a drive recorder that is an in-vehicle device including a main body portion having a camera, a support portion protruding upward from the main body portion, and a plate-like base formed at an upper tip end of the support portion. The drive recorder is attached to a windshield of a vehicle by adhering the base to an inner surface of the windshield with a double-sided tape.

In the support portion of the in-vehicle device described in Patent Literature 1, an arm portion and a columnar support portion, that are divided into a main body portion side and a base side, are axially engaged with each other so as to be rotatable up and down around a horizontal axis, and can be fastened and fixed at an arbitrary rotation position with a nut. Therefore, a user can adjust an optical axis direction of the camera with respect to the windshield by rotation in a vertical direction.

### CITATION LIST

### PATENT LITERATURE

Patent Literature 1: JP 2020-199800 A

### SUMMARY

In the in-vehicle device described in Patent Literature 1, the main body portion is attached to the windshield through the support portion extending in the vertical direction. Therefore, the distance in the vertical direction from the attachment position on the windshield to the lower end of the main body portion is long, and thus an occupant's view is significantly blocked.

An object of the present invention is to provide an in-vehicle device with a small range that blocks an occupant's view.

An in-vehicle device according to an embodiment includes: an attachment portion having an attachment plate; a first housing configured to rotatably support the attachment portion around a single axis; a knob configured to sandwich the attachment portion between the knob and the first housing and prevent the attachment portion from rotating with respect to the first housing; and a second housing configured to move with respect to the first housing between a first position at which the knob is covered and a second position at which the knob is exposed.

According to the embodiment, it is possible to provide an in-vehicle device with a small range that blocks an occupant's view.

### BRIEF DESCRIPTION OF THE DRAWINGS

[FIG. 1A] FIG. 1A is a schematic cross-sectional view illustrating a configuration of an in-vehicle device 90 of Example 1 according to an embodiment in a first aspect.
[FIG. 1B] FIG. 1B is a schematic cross-sectional view illustrating a configuration of the in-vehicle device 90 in a second aspect.
[FIG. 2A] FIG. 2A is a schematic cross-sectional view taken along the line S2A-S2A in FIG. 1A.
[FIG. 2B] FIG. 2B is a schematic cross-sectional view illustrating a state in which an attachment portion A3 of the in-vehicle device 90 is rotated from a first position to a second position illustrated in FIG. 2A.
[FIG. 3] FIG. 3 is a rear view of a first housing of the in-vehicle device 90.
[FIG. 4A] FIG. 4A is a first perspective view illustrating an appearance of the in-vehicle device 90 in the first aspect.
[FIG. 4B] FIG. 4B is a first perspective view illustrating an appearance of the in-vehicle device 90 in the second aspect.
[FIG. 5A] FIG. 5A is a second perspective view illustrating an appearance of the in-vehicle device 90 in the first aspect.
[FIG. 5B] FIG. 5B is a second perspective view illustrating an appearance of the in-vehicle device 90 in the second aspect.
[FIG. 6A] FIG. 6A is a left side view illustrating an appearance of the in-vehicle device 90 in the first aspect.
[FIG. 6B] FIG. 6B is a left side view illustrating an appearance of the in-vehicle device 90 in the second aspect.
[FIG. 7] FIG. 7 is a perspective view for explaining a method of adjusting a posture of the in-vehicle device 90.
[FIG. 8] FIG. 8 is a perspective view for explaining a method of shifting the in-vehicle device 90 from the first aspect to the second aspect.
[FIG. 9A] FIG. 9A is a view illustrating an operation of a guide portion AS illustrated in a cross-sectional view taken along the line S8-S8 in FIG. 2A, and illustrates a state when a first housing A1 and a second housing A2 are engaged with each other.
[FIG. 9B] FIG. 9B is a view illustrating an operation of the guide portion AS illustrated in the cross-sectional view taken along the line S8-S8 in FIG. 2A, and illustrates a movement state between the first aspect and the second aspect.
[FIG. 9C] FIG. 9C is a view illustrating an operation of the guide portion AS illustrated in the cross-sectional view taken along the line S8-S8 in FIG. 2A, and illustrates a state in the first aspect.
[FIG. 9D] FIG. 9D is a view illustrating an operation of the guide portion AS illustrated in the cross-sectional view taken along the line S8-S8 in FIG. 2A, and illustrates a state in which disengagement is restricted.
[FIG. 10A] FIG. 10A is a schematic cross-sectional view illustrating a configuration of an in-vehicle device 91 of Example 2 according to an embodiment in a first aspect.
[FIG. 10B] FIG. 10B is a schematic cross-sectional view illustrating a configuration of the in-vehicle device 91 in a second aspect.
[FIG. 11] FIG. 11 is a schematic cross-sectional view taken along the line S11-S11 in FIG. 10A.
[FIG. 12] FIG. 12 is a schematic side view illustrating an attachment aspect of the in-vehicle device 90.

### DETAILED DESCRIPTION

### (Example 1)

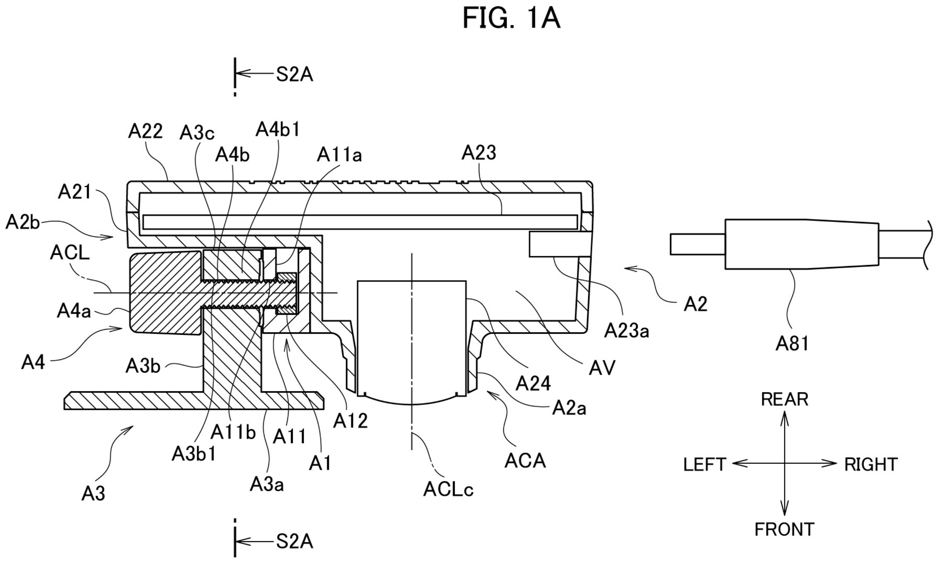

First, a configuration of an in-vehicle device 90 of Example 1 according to an embodiment will be described with reference to FIGS. 1A to 9D. The in-vehicle device 90 to be described below is a drive recorder to be attached to a windshield of an automobile.

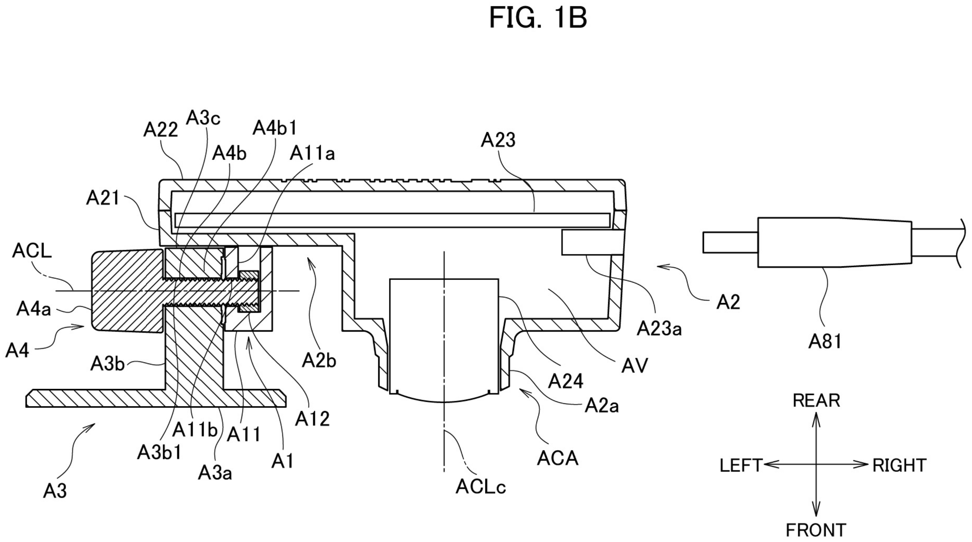

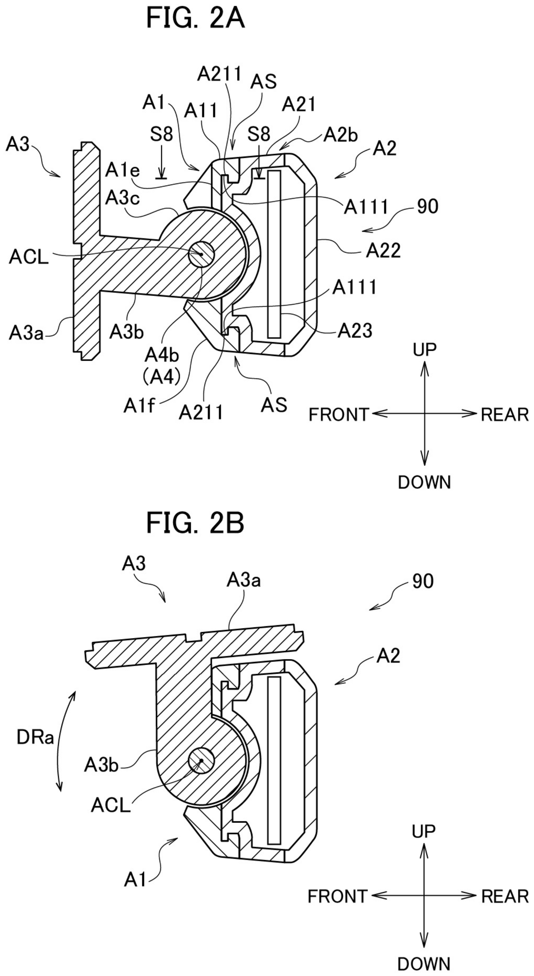

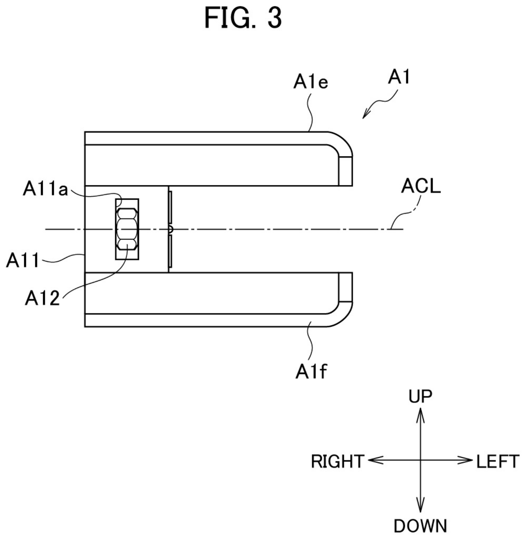

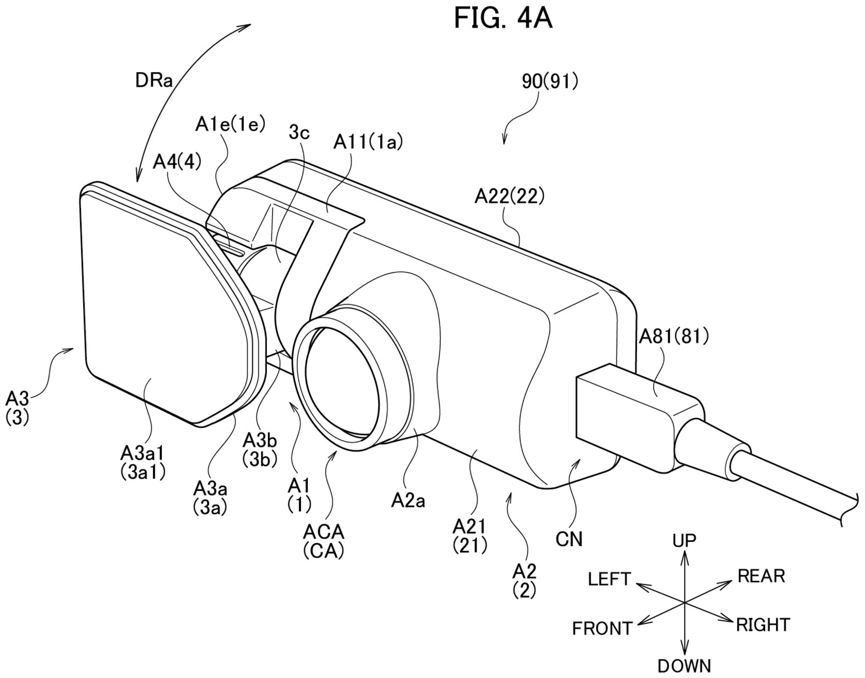

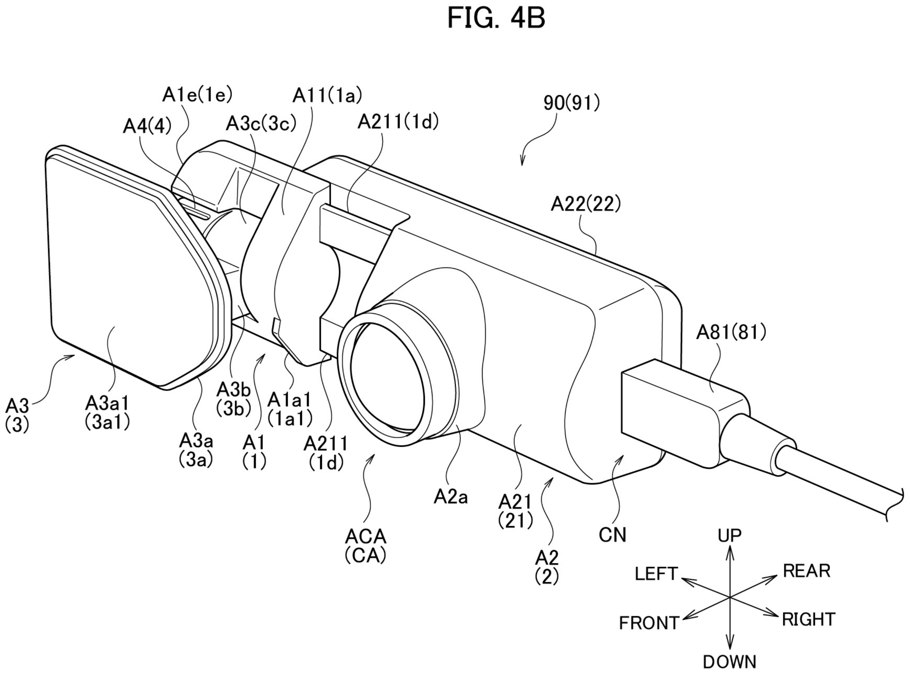

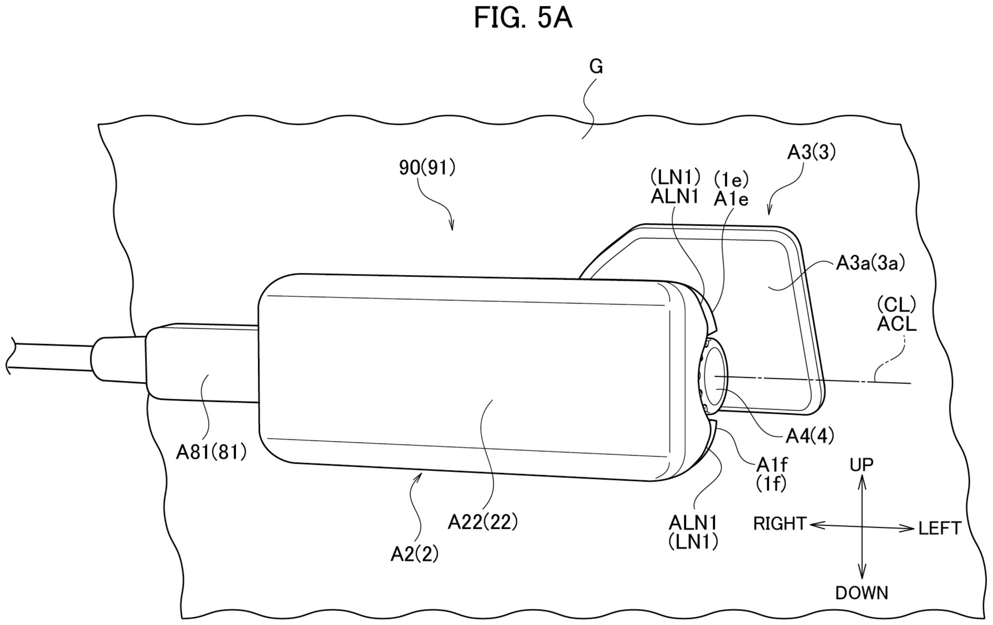

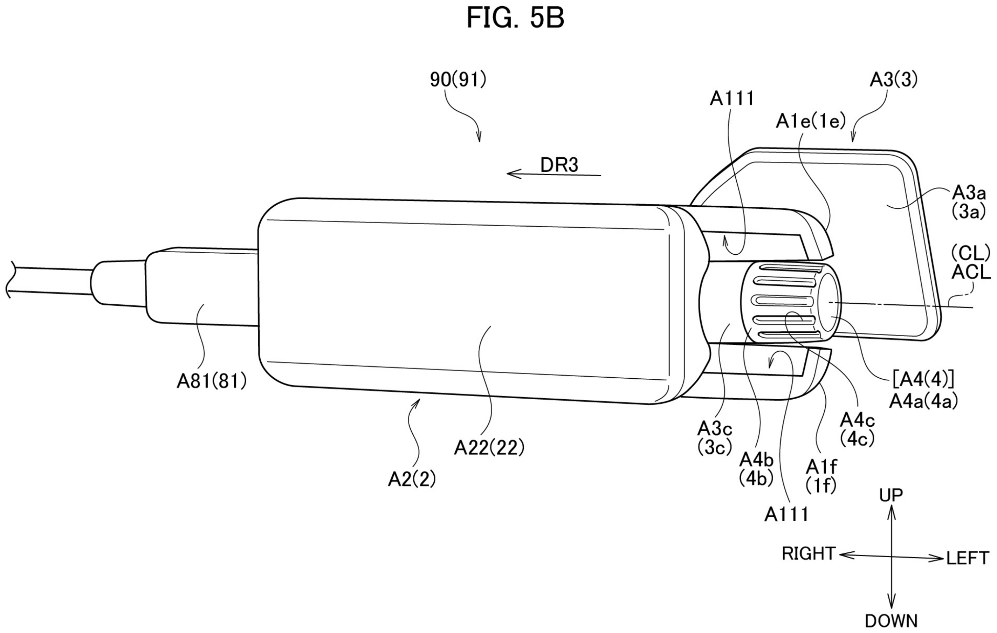

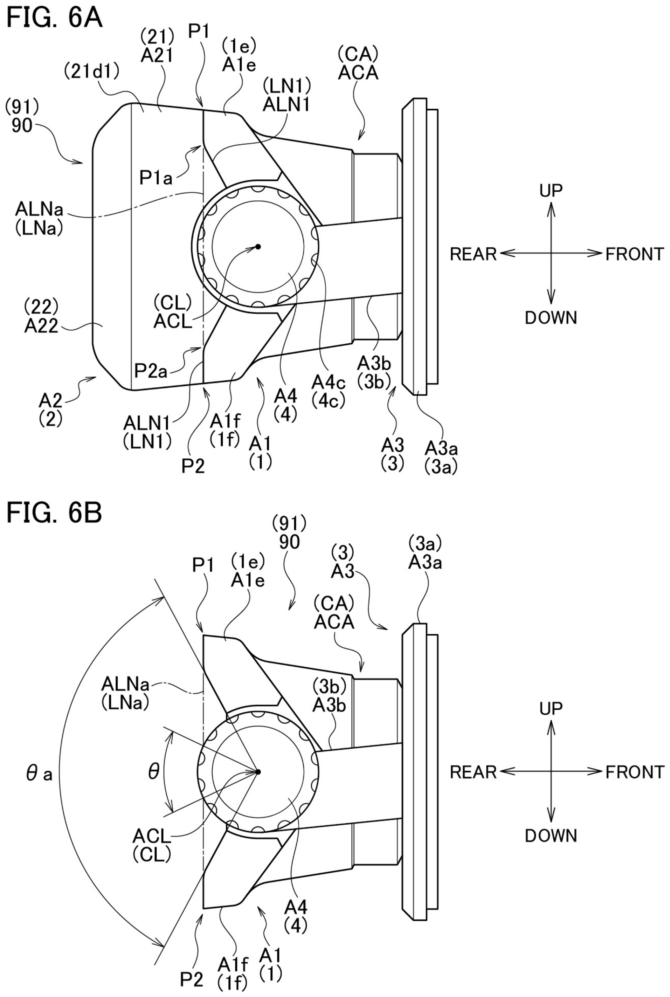

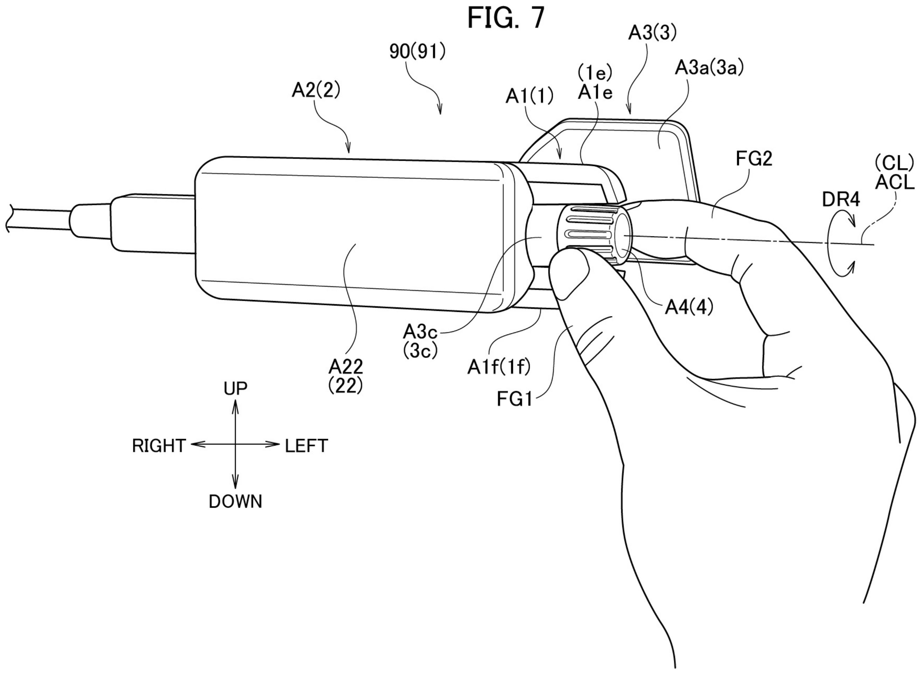

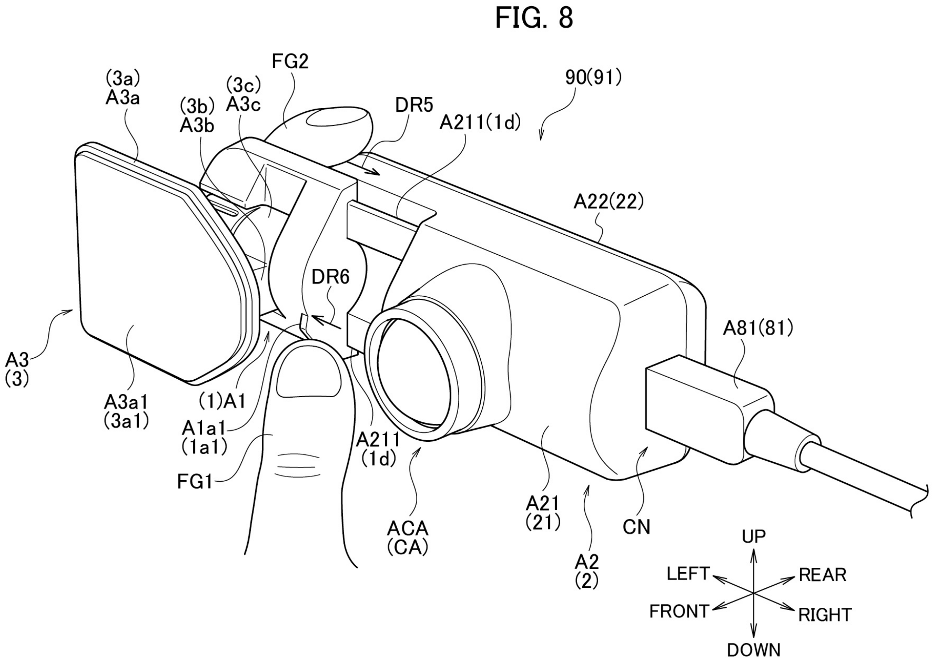

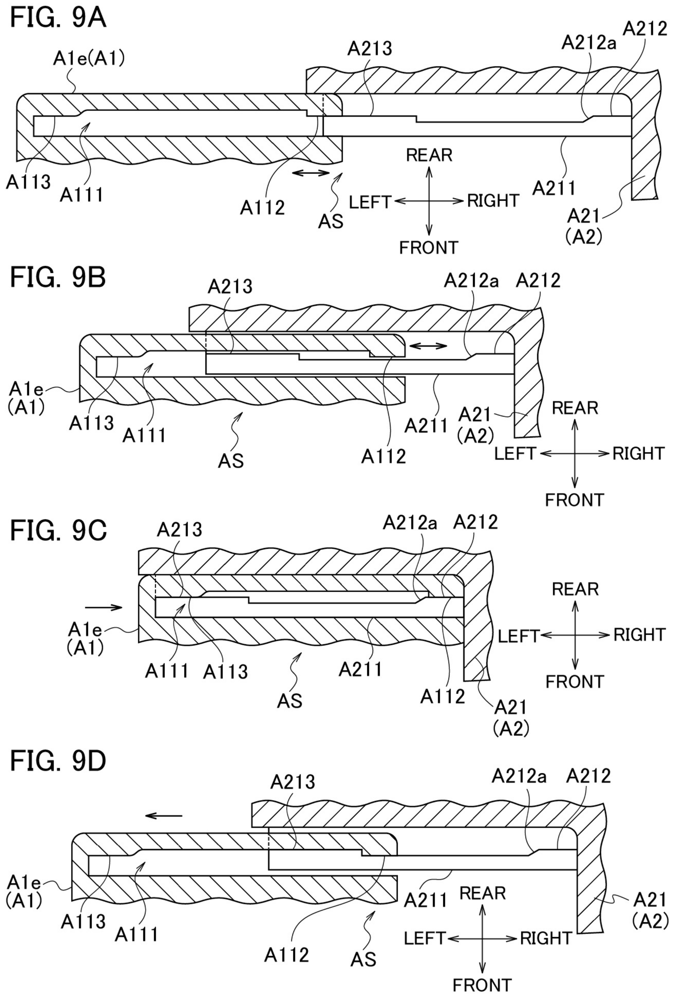

FIG. 1A is a schematic cross-sectional view illustrating a configuration of the in-vehicle device 90 of Example 1 according to the embodiment in a first aspect, and FIG. 1B is a schematic cross-sectional view illustrating a configuration of the in-vehicle device 90 in a second aspect. FIG. 2A is a schematic cross-sectional view taken along the line S2AS2A in FIG. 1A, and FIG. 2B is a schematic cross-sectional view illustrating a state in which an attachment portion A3 of the in-vehicle device 90 is rotated from a first position to a second position illustrated in FIG. 2A. FIG. 3 is a rear view of a first housing of the in-vehicle device 90. FIG. 4A is a first perspective view illustrating an appearance of the in-vehicle device 90 in the first aspect, and FIG. 4B is a first perspective view illustrating an appearance of the in-vehicle device 90 in the second aspect. FIG. 5A is a second perspective view illustrating an appearance of the in-vehicle device 90 in the first aspect, and FIG. 5B is a second perspective view illustrating an appearance of the in-vehicle device 90 in the second aspect. FIG. 6A is a left side view illustrating an appearance of the in-vehicle device 90 in the first aspect, and FIG. 6B is a left side view illustrating an appearance of the in-vehicle device 90 in the second aspect. FIG. 7 is a perspective view for explaining a method of adjusting a posture of the in-vehicle device 90, and FIG. 8 is a perspective view for explaining a method of shifting the in-vehicle device 90 from the first aspect to the second aspect. FIG. 9A is a view illustrating an operation of a guide portion AS illustrated in a cross-sectional view taken along the line S8-S8 in FIG. 2A, and illustrates a state when a first housing A1 and a second housing A2 are engaged with each other. FIG. 9B is a view illustrating an operation of the guide portion AS illustrated in the cross-sectional view taken along the line S8-S8 in FIG. 2A, and illustrates a movement state between the first aspect and the second aspect. FIG. 9C is a view illustrating an operation of the guide portion AS illustrated in the cross-sectional view taken along the line S8-S8 in FIG. 2A, and illustrates a state in the first aspect. FIG. 9D is a view illustrating an operation of the guide portion AS illustrated in the cross-sectional view taken along the line S8-S8 in FIG. 2A, and illustrates a state in which disengagement is restricted. For convenience of description, front, rear, left, and right directions are indicated by the arrows in FIG. 1A. The upper side corresponds to the front side of the paper surface of FIG 1A, and the lower side corresponds to the rear side of the paper surface of FIG. 1A.

Since FIGS. 4A to 8 are also referred to in the description of Example 2 to be described later, some of the reference numerals related to an in-vehicle device 91 of Example 2 are also shown in parentheses.

The in-vehicle device 90 has a slide structure in which two housings are slidable with respect to each other in a crosswise direction, and can be expanded and contracted between the first aspect with the shortest overall length in the crosswise direction and the second aspect with the longest overall length in the crosswise direction.

The in-vehicle device 90 includes a first housing A1, a second housing A2, an attachment portion A3, and a knob A4. As shown in FIGS. 1A, 3, and the like, the first housing A1 has a base portion A11, a nut A12, and a pair of knob supporters A1e and A1f, and is formed in a substantially U-shape with an opening on the left side in a rear view shown in FIG. 3. The base portion A11 and the knob supporters A1e and A1f are integrally formed by, for example, resin injection molding. The base portion A11 has a groove portion A11a that has an opening on the rear side and has a hollow on the front side. The nut A12 is accommodated in the rear of the groove portion A11a in such a posture that an axis ACL thereof extends in the crosswise direction. As illustrated in FIG. 1A, a through hole A11b with the axis ACL as its center is formed in a left wall portion of the base portion A11. In the through hole A11b, a shaft portion A4b of the knob A4 having a male screw formed on its outer peripheral surface is inserted from the left and screwed into the nut A12.

As shown in FIGS. 2A, 4A, and 5B, the pair of knob supporters A1e and A1f are formed to be separated in the vertical direction and extend leftward from a portion of the base portion A11 where the groove portion A11a is formed. As shown in FIG. 2A, on rear surfaces of the knob supporters A1e and A1f, concave guide portions A111 are respectively formed, which are grooves that are hollow in a direction in which they vertically move apart from each other, and extend in the crosswise direction.

The second housing A2 has a base body A21 and a panel A22. The base body A21 is formed in a flat container shape with an opening on the rear side by, for example, resin injection molding. That is, a housing space AV is formed inside the base body A21. As shown in FIGS. 1A and 4A, the base body A21 has a protrusion portion A2a protruding forward in a cylindrical shape at a center portion in the crosswise direction. In the base body 21, a thickness of an extending portion A2b, which is a portion extending leftward from the protruding portion A2a, is smaller than a thickness in a front-to-rear direction of a right portion from the center portion in the crosswise direction including the protruding portion A2a. As illustrated in FIG. 1A, a camera unit A24 is attached to the inside of the protrusion portion A2a in the housing space AV. The camera unit A24 with an optical axis ACLc extending in the front-to-rear direction captures an image of a landscape in front. The camera unit A24 and the protruding portion A2a constitute a camera portion ACA.

A connector A23a is attached to a right side surface of the base body A21. A connection plug A81 is detachable from the right side of the connector A23a. A substrate A23 is accommodated in a rear portion of the housing space AV in a posture extending in the vertical and crosswise directions. The substrate A23 is electrically connected to the camera unit A24 and the connector A23a, and an image captured by the camera unit A24 is output to an external device through the connection plug A81 connected to the connector A23a.

The panel A22 is a substantially plate-like member that is attached to the base body A21 to block the opened rear portion of the base body A21. The panel A22 has a flat plate portion and a low wall rising forward that is formed at a peripheral edge of the flat plate portion.

A rear surface of the panel A22 is a surface that is visually recognized by a vehicle occupant in a state in which the in-vehicle device 90 (drive recorder) is attached to a vehicle windshield. A logo of a product brand or the like is attached to the panel A22 by printing or embossing. The panel A22 is made of a resin or metal.

As illustrated in FIG. 2A, in a front portion of the extending portion A2b of the base body A21, a pair of convex guide portions A211 are formed, which are separated in the vertical direction and extend in the crosswise direction. The pair of convex guide portions A211 are formed as ribs protruding in directions vertically away from each other. The pair of convex guide portions A211 are engaged with the pair of concave guide portions A111 of the first housing A1, so that a pair of guide portions AS separated in the vertical direction are formed.

Therefore, the second housing A2 is slidable with respect to the first housing A1 within a predetermined range in the crosswise direction. Specifically, the second housing A2 slides with respect to the first housing A1 between a first position at a left end position of the movement range illustrated in FIG. 1A and a second position at a right end position of the movement range illustrated in FIG. 1B.

A state of the guide portion AS in this slide will be described with reference to FIGS. 9A to 9D. FIG. 9A is a view illustrating an operation of a guide portion AS illustrated in a cross-sectional view taken along the line S8-S8 in FIG. 2A, and illustrates a state when a first housing A1 and a second housing A2 are engaged with each other. FIG. 9B is a view illustrating an operation of the guide portion AS illustrated in the cross-sectional view taken along the line S8-S8 in FIG. 2A, and illustrates a movement state between the first aspect and the second aspect. FIG. 9C is a view illustrating an operation of the guide portion AS illustrated in the cross-sectional view taken along the line S8-S8 in FIG. 2A, and illustrates a state in the first aspect. FIG. 9D is a view illustrating an operation of the guide portion AS illustrated in the cross-sectional view taken along the line S8-S8 in FIG. 2A, and illustrates a state in which disengagement is restricted.

As illustrated in FIG. 9A, in a rear side wall of the concave guide portion A111 of the first housing A1, an outlet protrusion A112 and a rear protrusion A113 are formed to protrude to narrow the concave portion's width at the outlet on the right side and at the rear on the left side of the concave guide portion A111, respectively. Meanwhile, in a rear wall of the convex guide portion A211 of the second housing A2, a rear protrusion A212 and an outlet protrusion A213 are formed to protrude rearward at the rear on the right side and at the outlet on the left side of the convex guide portion A211, respectively.

In the assembling process of the in-vehicle device 90, when the first housing A1 and the second housing A2 are engaged with each other by the guide portion AS, the convex guide portion A211 is made to enter the concave guide portion A111 as illustrated in FIG. 9A. The outlet protrusion A112 and the outlet protrusion A213 are formed to be slightly strongly fitted to each other in the thickness direction (front-to-rear direction). Therefore, in this case, an operator can apply a certain amount of force to pass both of the strongly fitted protrusions to achieve the engaged state.

In the engaged state between a position slightly before the first position and the second position, as illustrated in FIG. 9B, a gap is formed in the thickness direction, so that the second housing A2 slides with respect to the first housing A1 with a slight force by the operator.

In a case where the engagement reaches the vicinity of the first position, the outlet protrusion A112 of the first housing A1 and the rear protrusion A212 of the second housing A2 are engaged with each other. The protrusion heights of the outlet protrusion A112 and the rear protrusion A212 are formed so that slight sliding resistance is generated. Therefore, the operator can position the second housing A2 at the first position with a good moderation feeling, and the second housing A2 does not easily move from the first position. A guide portion A212a inclined so that its thickness gradually changes is formed on the outlet side of the rear protrusion A212, and thus the outlet protrusion A112 smoothly enters the portion where the rear protrusion A212 is formed, and moves to the first position (deepest position) illustrated in FIG. 9C without any trouble.

Meanwhile, in a case where the first housing A1 is moved from the first position illustrated in FIG. 9C to the second position illustrated in FIG. 9D, left side end portions of the outlet protrusion A112 and the outlet protrusion A213 are formed to have surfaces orthogonal to the moving direction. Therefore, in a case where the first housing A1 is simply moved leftward, the outlet protrusion A112 and the outlet protrusion A213 are brought into contact with each other at the second position and further movement is restricted, resulting in positioning at the second position.

In a special case such as maintenance, when the engagement of the guide portion AS is released, the first housing A1 can be separated from the second housing A2 through a slight strong fitting state by applying a force to move the first housing A1 leftward while pushing the first housing A1 rearward from the state illustrated in FIG. 9D.

As described above, the first position is a position where the right surface of the first housing A1 is brought into contact with the left surface of the second housing A2 in FIG. 1A and the leftward movement of the first housing A1 is restricted. At the first position and adjacent positions leading to the first position, the outlet protrusion A112 of the concave guide portion A111 and the rear protrusion A212 of the convex guide portion A211 illustrated in FIG. 2A are slightly strongly fitted to each other. Therefore, in a case where the second housing A2 moved leftward from the second position side approaches the first position, a user feels a certain sense of resistance and positions the second housing A2 at the first position against the resistance. Therefore, the second housing A2 at the first position is maintained at the first position unless a force of a predetermined value or more is applied from the outside.

Meanwhile, at the second position, the outlet protrusion A112 of the concave guide portion A111 and the outlet protrusion A213 of the convex guide portion A211 are brought into contact with each other and the rightward movement of the second housing A2 is restricted. This contact can be released by applying a certain level of force or more in the pulling direction (rightward direction) while pressing the second housing A2 forward. In the manufacturing process of the in-vehicle device 90, assembling can be achieved by engaging the second housing A2 with the first housing A1.

As illustrated in FIGS. 1A and 2A, the attachment portion A3 has an attachment plate A3a, a columnar support portion A3b, and a shaft engagement portion A3c. The shaft engagement portion A3c has a through hole A3b1 with the axis ACL extending in the crosswise direction as an axis and is formed in an annular shape. The columnar support portion A3b is formed in a columnar shape extending radially outward from the shaft engagement portion A3c. The attachment plate A3a is a flat plate-like portion provided at a tip end of the columnar support portion A3b and extending in parallel with the axis ACL. An adhesive member A3a1 (see FIG. 4A) such as a double-sided tape is attached to a surface of the attachment plate A3a.

The knob A4 has a head portion A4a that can be grasped by hand and a shaft portion A4b extending rightward from the head portion A4a. A female screw portion A4b1 that is to be screwed with the nut A12 is formed on the peripheral surface of the shaft portion A4b. As illustrated in FIG. 5B, a plurality of recessed concave portions A4c extending in the axial direction and serving as finger hooks are formed on the peripheral surface of the head portion A4a while spaced apart from each other in a circumferential direction.

As illustrated in FIG. 1A, the shaft portion A4b of the knob A4 is inserted from the left into the through hole A3b1 of the shaft engagement portion A3c of the attachment portion A3, and further passes through the through hole A11b of the first housing A1 to be screwed into the nut A12. Therefore, by tightening the knob A4, the shaft engagement portion A3c is pressed against the base portion A11 of the first housing A1 and the rotation of the attachment portion A3 around the axis ACL with respect to the first housing A1 and the second housing A2 is restricted. In addition, by loosening the knob A4, the rotation position of the attachment portion A3 around the axis ACL with respect to the first housing A1 and the second housing A2 can be set to an arbitrary position within a predetermined angular range.

The in-vehicle device 90 can move the position of the attachment portion A3 around the axis ACL between a rotation position where the posture of the attachment plate A3a extends substantially in the vertical and crosswise directions as illustrated in FIGS. 1A and 2A and a rotation position where the posture of the attachment plate A3a extends substantially in the front-to-rear and crosswise directions as illustrated in FIG. 2B (see the arrow DRa).

As illustrated in FIG. 5A, the attachment portion A3 is attached to a vehicle member G with the adhesive member A3a1 in such a posture that the angle about the axis ACL is optimally adjusted with respect to the first housing A1 (not illustrated in FIG. 5A) and the second housing A2. The vehicle member G is, for example, a windshield.

Therefore, when the in-vehicle device 90 is attached to, for example, a windshield of a vehicle, the optical axis ACLc of the camera unit A24 can be rotated in the vertical direction and adjusted in a desired direction regardless of the inclination angle of the windshield.

In FIG. 1A, the right surface of the columnar support portion A3b and the left surface of the base portion A11 of the first housing A1 that is brought into contact with the right surface are not limited to being flat surfaces brought into contact with each other to restrict the rotation by a frictional force, but may each have radial projections and recesses that mesh with each other to provide projection-recess engagement. In this case, a rotation position that can be restricted is determined for each angular pitch of the radial projections and recesses, and the rotation can be restricted more firmly for positioning.

The structure around the knob A4 will be described with reference to FIGS. 6A, 6B, and 7. FIG. 6A is a left side view illustrating an appearance of the in-vehicle device 90 in the first aspect, and FIG. 6B is a left side view illustrating an appearance of the in-vehicle device 90 in the second aspect. FIG. 7 is a perspective view for explaining a method of adjusting a posture of the in-vehicle device 90.

As illustrated in FIGS. 5A and 6A, when the second housing A2 is at the first position, the knob A4 is covered by the second housing A2 when viewed from the rear side (the front side of the paper surface of FIG. 5A). A gap between the base body A21 of the second housing A2 and the knob A4 is so narrow that a finger does not enter the gap. Therefore, in the first aspect of the in-vehicle device 90 in which the second housing A2 is at the first position, the knob A4 cannot be turned with a finger. Meanwhile, as illustrated in FIGS. 5B and 6B, the knob A4 is exposed to be visible from the rear side when the second housing A2 is shifted to the right and is at the second position.

The pair of knob supporters A1e and A1f, which are close to the knob A4 and extend leftward by a length corresponding to the knob A4, are formed in the base portion A11 of the first housing A1. Specifically, the knob supporters A1e and A1f extend to a left end position of the knob A4 in a state in which the knob A4 is fastened. As shown in FIG. 6A, the knob supporters A1e and A1f are formed on the upper side and the lower side of the knob A4, respectively, to face each other in the radial direction with the knob A4 interposed therebetween. The knob supporters A1e and A1f prevent deformation or damage of the knob A4 by making it difficult for an excessive force to be directly applied to the knob A4 in a case where the in-vehicle device 90 is accidentally dropped, for example.

Meanwhile, in a portion corresponding to the knob A4 in the peripheral shape of the knob A4, a boundary portion ALN1 indicating a boundary separating the first housing A1 and the second housing A2 is set to bend rather than to be a straight line extending vertically. The boundary portion ALN1 is a narrow gap and is indicated by the solid line in FIG. 6A. Specifically, as illustrated in FIG. 6A, the positions of both end portions (upper end portion and lower end portion) of the boundary portion ALN1 in the width direction (vertical direction in FIG. 6A) orthogonal to the axis ACL in the second housing A2 are at a position P1 and a position P2 on the rear side of the axis ACL of the knob 4, respectively. In addition, the boundary portion ALN1 extends downward and upward from the position P1 and the position P2, and is bent at bending points P1a and P2a to extend toward the axis ACL.

In other words, in the first housing A1 and the second housing A2, the rear surfaces of the pair of knob supporters A1e and A1f serve as the boundary portion ALN1 in the portions corresponding to the knob A4. When viewed from the direction of the axis ACL that is a single axis, the position of the axis ACL is on one side (front side) of a line segment ALNa connecting the positions (positions P1 and P2) of both end portions of the second housing A2 in the width direction (vertical direction) orthogonal to the axis ACL at the boundary portion ALN1 between the second housing A2 and the pair of knob supporters A1e and A1f. The boundary portion ALN1 is formed to enter one side of the line segment ALNa.

Therefore, as illustrated in FIG. 6B, the exposure angle range centered on the axis ACL in a state in which the second housing A2 slides and the knob A4 is exposed is an exposure angle range θa enlarged in the vertical direction relative to an exposure angle range θ of the knob A4 in a case where the bending points P1a and P2a are not provided. Therefore, as illustrated in FIG. 7, in the in-vehicle device 90, the tightening and loosening of the knob A4 by a thumb FG1 and an index finger FG2, indicated by the arrow DR4, are very easy in the second aspect.

As illustrated only in FIG. 8, the in-vehicle device 90 may have a rib-like protrusion portion A1a1 protruding forward along the edge portion on the lower right side of the base portion A11 of the first housing A1. FIG. 8 is a perspective view for explaining a method of shifting the in-vehicle device 90 from the first aspect to the second aspect.

The protrusion portion A1a1 is formed to protrude in a direction away from the axis ACL on the opposite side to the panel A22 with respect to the axis ACL in the first housing A1. As described above, when the second housing A2 is moved from the first position to the second position, it is necessary to apply a predetermined force to the second housing A2 to move the second housing A2 to the right with respect to the first housing A1, and the protrusion portion A1a1 serves as a finger hook to facilitate the movement.

Specifically, as illustrated in FIG. 8, the index finger FG2 is brought into contact with the left end portions of the base body A21 and the panel A22 of the second housing A2 to push them rightward (see the arrow DR5). In addition, the thumb FG1 is placed on the first housing A1 to push it leftward (see the arrow DR6). In that case, since the thumb FG1 can be hooked on the protrusion portion A1a1, a leftward force can be reliably and easily applied to the first housing A1 with the finger.

As described above, in the in-vehicle device 90, since the attachment portion A3 having the attachment plate A3a rotates around the axis ACL passing through the first housing A1 with respect to the first housing A1, the vertical direction from the attachment position to the lower end of the housing is short and compact, and the range that blocks the occupant's view is small. The in-vehicle device 90 is capable of mode shift between the first aspect in which the knob A4 for adjustment of the optical axis ACLc by rotation in the vertical direction is covered to make it impossible to tighten and loosen the knob A4 and the second aspect in which the knob A4 is exposed to make it possible to tighten and loosen the knob A4. Therefore, there is no possibility that the knob A4 is unintentionally rotated and the direction of the optical axis ACLc is changed, and the length of the in-vehicle device 90 in the crosswise direction in the use state is shortened. In addition, since the knob A4 is not visible to an occupant, the design is simplified and the appearance quality is improved.

### (Example 2)

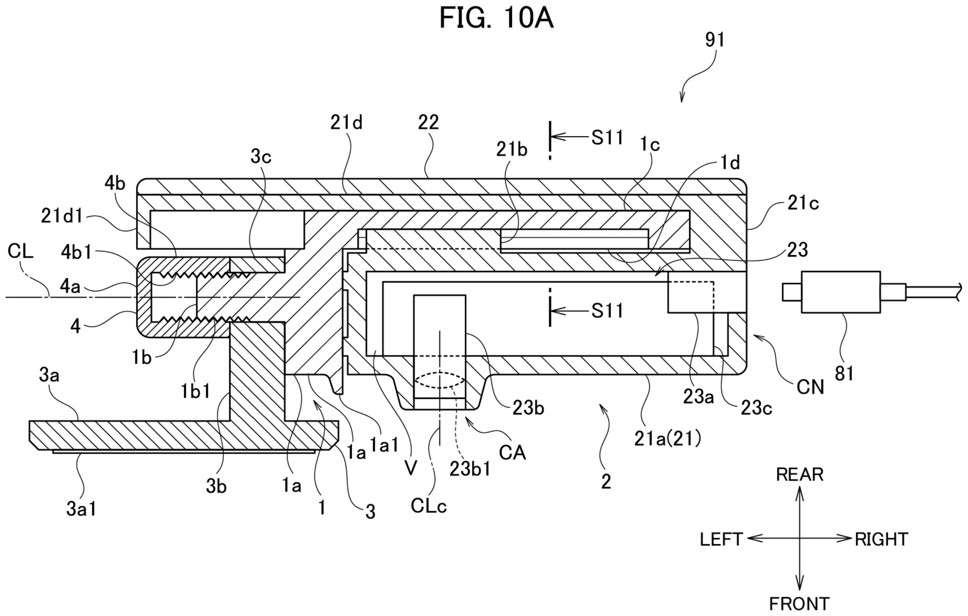

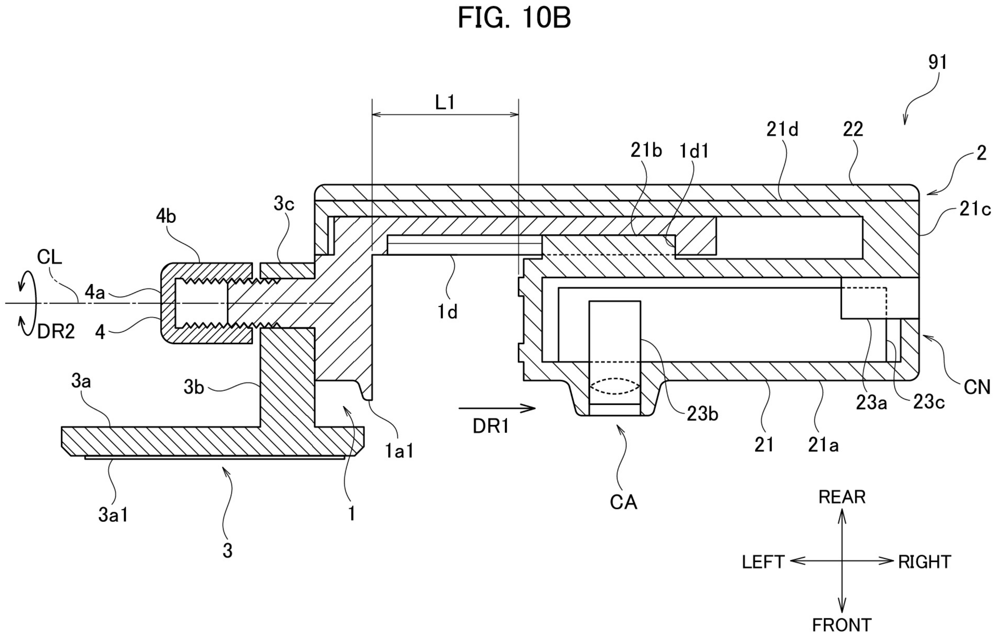

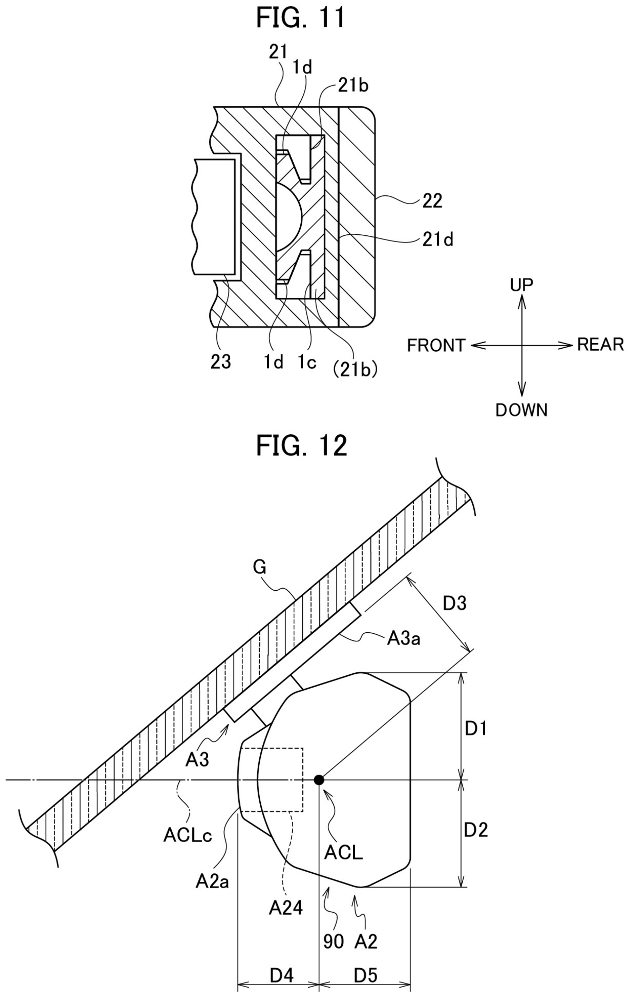

Next, a configuration of an in-vehicle device 91 of Example 2 according to an embodiment will be described mainly with reference to new FIGS. 10A, 10B, and 11 and also with reference to FIGS. 4A to 8B. The in-vehicle device 91 to be described below is a drive recorder attached to a windshield of an automobile.

FIG. 10A is a schematic cross-sectional view illustrating a configuration of the in-vehicle device 91 in a first aspect, FIG. 10B is a schematic cross-sectional view in a second aspect, and FIG. 11 is a schematic cross-sectional view taken along the line S11-S11 in FIG. 10A. For convenience of description, front, rear, left, and right directions are indicated by the arrows in FIG. 10A. The upper side corresponds to the front side of the paper surface of FIG. 10A, and the lower side corresponds to the rear side of the paper surface of FIG.10A. Note that, as described above, FIGS. 4A to 8 are shared with Example 1, and some of the reference numerals corresponding to the in-vehicle devices 91 are shown in parentheses.

The in-vehicle device 91 has a slide structure that can slide in a crosswise direction, and can be expanded and contracted between a first aspect with the shortest overall length in the crosswise direction and a second aspect with the longest overall length in the crosswise direction.

As illustrated in FIG. 10A, the in-vehicle device 91 has a first housing 1, a second housing 2, an attachment portion 3, and a knob 4. The first housing 1 is formed by resin injection molding, and has a base portion 1a, a shaft portion 1b, an extension guide portion 1c, and a guide rail portion 1d.

The base portion 1a is formed in a thick plate shape extending in a direction orthogonal to an axis CL. The extension guide portion 1c is formed by rightward extension from a rear portion of the base portion 1a. As illustrated in FIGS. 10B and 11, on a front surface of the extension guide portion 1c, a pair of the guide rail portions 1d parallel to each other are formed, which protrude upper-forward and lower-forward and extend in the crosswise direction while being separated in the vertical direction.

In FIG. 10A, the shaft portion 1b is formed to extend in a columnar shape from the base portion 1a with the axis CL that is a single axis extending in the crosswise direction as an axis. The shaft portion 1b has a male screw portion 1b1 on its tip end side. The axis CL is set at a position penetrating the first housing 1.

The second housing 2 has a base body 21 and a panel 22 that can also be used as an ornament. The base body 21 has a housing case 21a, a slider 21b, a side wall portion 21c, and a rear wall portion 21d. The housing case 21a is formed in a closed box shape having a housing space V that is long in the crosswise direction inside. The housing case 21a has, at its rear edge portion, a slider 21b that is engaged with the pair of guide rail portions 1d of the first housing 1 and is capable of moving the first housing 1 in the crosswise direction. In addition, the housing case 21a is formed so that the side wall portion 21c extends rearward at a right end portion of the rear edge portion. The elongated plate-like rear wall portion 21d extending leftward is integrally formed at a rear end of the side wall portion 21c. The rear wall portion 21d has a left side wall portion 21d1 (see FIGS. 6A and 10A) bent from a left end portion and extending forward.

The panel 22 is a plate-like member attached to a rear surface of the rear wall portion 21d. The panel 22 is a surface that is visually recognized by a vehicle occupant in a state in which the in-vehicle device 91 (drive recorder) is attached to a vehicle windshield. A logo of a product brand or the like is attached to the panel 22 by printing or embossing. The panel 22 is made of a resin or metal.

As illustrated in FIG. 11, the pair of guide rail portions 1d of the first housing 1 have shapes extending upper-forward and down-forward, respectively, toward the front side, and are formed in parallel to be separated in the vertical direction. The slider 21b of the second housing 2 has a shape that holds the pair of guide rail portions 1d from above and below. The slider 21b is engaged with the pair of guide rail portions 1d to be movable by a finger force in the crosswise direction (front-back direction of the paper surface of FIG. 11) without play in the front-to-rear and vertical directions.

The movement range of the second housing 2 in the crosswise direction with respect to first housing 1 is a range of a distance L1 from a left end position illustrated in FIG. 10A to a right end position illustrated in FIG. 10B. The left end position is determined by the left end of the housing case 21a of the second housing 2 coming into contact with the base portion 1a of the first housing 1. The right end position is determined by the right end portion of the slider 21b coming into contact with a contact wall portion 1d1 formed at the right end of the guide rail portion 1d.

Hereinafter, the left end position is also referred to as a first position and the right end position is also referred to as a second position. A mode of the in-vehicle device 91 in which the second housing 2 is at the first position is also referred to as a first aspect and a mode of the in-vehicle device 91 in which the second housing 2 is at the second position is also referred to as a second aspect.

The first housing 1 and the second housing 2 are provided with a locking mechanism (not illustrated) that locks the second housing 2 by engagement of the members at the first position and the second position. An unlocking force is set so that the locking can be released by applying a force equal to or greater than a predetermined force by a finger. The guide portion AS of Example 1 may be applied to the engagement structure between the first housing 1 and the second housing 2.

As illustrated in FIG. 10A, the housing space V inside the housing case 21a in the second housing houses a substrate body 23. The substrate body 23 includes a substrate 23c, and a connector 23a to be electrically connected to the outside and a camera unit 23b which are mounted on the substrate 23c.

The connector 23a is arranged to face from a connection portion CN opened on a right end surface of the housing case 21a, and a connection plug 81 for electrical connection with an external device is attachable to and detachable from the connector 23a at the connection portion CN. The camera unit 23b is arranged on the left side in the housing space V, and an optical axis CLc extends in a direction orthogonal to the axis CL extending in the longitudinal direction of the housing case 21a. In the housing case 21a, a camera portion CA is formed which protrudes forward in a cylindrical shape with the optical axis CLc as an axis. In the camera portion CA, a lens 23b1 of the camera unit 23b is visually recognized from the outside.

As illustrated in FIG. 10A, the attachment portion 3 has an attachment plate 3a, a columnar support portion 3b, and a shaft engagement portion 3c. The shaft engagement portion 3c is formed in an annular shape with the crosswise direction as an axis, and is fitted to the shaft portion 1b of the first housing 1 without play so as to slidably rotate on the axis CL. That is, the first housing 1 supports the shaft engagement portion 3c in a relatively slidably rotating manner. The columnar support portion 3b is formed in a columnar shape extending radially outward from the shaft engagement portion 3c. The attachment plate 3a is a flat plate-like portion provided at a tip end of the columnar support portion 3b and extending in parallel with the axis CL. An adhesive member 3a1 such as a double-sided tape is attached to a surface of the attachment plate 3a. As illustrated in FIG. 5A, the attachment portion 3 is attached to a vehicle member G with the adhesive member 3a1 in such a posture that the angle about the axis CL is optimally adjusted with respect to the first housing 1 (not illustrated in FIG. 5A). The vehicle member G is, for example, a windshield.

As illustrated in FIG. 10A, the knob 4 is formed in a cup shape having a disk-like bottom wall portion 4a and a peripheral wall portion 4b rising from a peripheral edge of the bottom wall portion 4a. As illustrated in FIG. 5B, a plurality of concave portions 4c extending in the crosswise direction as finger hooks are formed on an outer peripheral surface of the peripheral wall portion at equal angular pitches in a circumferential direction. The peripheral wall portion 4b has a female screw portion 4b1 on its inner surface. The female screw portion 4b1 is screwed into the male screw portion 1b1 of the shaft portion 1b in the first housing 1. Therefore, the knob 4 can be tightened and loosened with respect to the base portion 1a with the axis CL as an axis and the shaft engagement portion 3c interposed therebetween (see the arrow DR2 in FIG. 10B).

By tightening the knob 4, relative rotation between the first housing 1 and the attachment portion 3 can be prevented. That is, as illustrated in FIG. 10A, by tightening the knob 4, the shaft engagement portion 3c of the attachment portion 3 can be sandwiched between the knob 4 and the base portion 1a of the first housing 1, and the shaft engagement portion 3c can be fixed unrotatably with respect to the base portion 1a. In a case where the knob 4 is loosened, as illustrated in FIG. 10B, the shaft engagement portion 3c is released from the fastening and becomes rotatable around the axis CL. That is, by loosening the knob 4, the relative rotation position around the axis CL between the first housing 1 and the attachment plate 3a can be adjusted, and by tightening the knob 4, the relative rotation position can be fixed at an arbitrary rotation position. Therefore, it is possible to adjust the position of the optical axis CLc of the camera portion CA in the vertical direction by rotation in a state in which the attachment plate 3a is attached to the windshield.

The rotatable range of the attachment portion 3 with respect to the first housing 1 is, for example, between a front position where the attachment plate 3a extends in the vertical and crosswise directions and an upper position where the attachment plate 3a is raised by about 90° and extends in the front-to-rear and crosswise directions as illustrated in FIGS. 10A and 4A (FIG. 4A: see the arrow DRa).

The structure around the knob 4 will be described with reference to FIGS. 6A, 6B, and 7. FIG. 6A is a left side view illustrating an appearance of the in-vehicle device 91 in the first aspect, and FIG. 6B is a left side view illustrating an appearance of the in-vehicle device 91 in the second aspect. FIG. 7 is a perspective view for explaining a method of adjusting a posture of the in-vehicle device 91.

As illustrated in FIGS. 6A, 5A, and 10A, when the second housing 2 is at the first position, the knob 4 is covered by the rear wall portion 21d (see FIG. 10A) of the base body 21 when viewed from the rear side (the front side of the paper surface of FIG. 5A). There is no gap between the rear wall portion 21d and the knob 4 into which a finger can enter. Therefore, in the first aspect of the in-vehicle device 91 in which the second housing 2 is at the first position, the knob 4 cannot be turned with a finger. Meanwhile, as illustrated in FIGS. 6B and 5B, the knob 4 is exposed to be visible from the rear side when the second housing 2 is shifted to the right and is at the second position.

A pair of knob supporters 1e and 1f, which are close to the knob 4 and extend leftward by a length corresponding to the knob 4, are formed in the base portion 1a of the first housing 1. Specifically, the knob supporters 1e and 1f extend to a left end position of the knob 4 in a state in which the knob 4 is fastened. As shown in FIG. 6A, the knob supporters 1e and 1f are formed on the upper side and the lower side of the knob 4, respectively, to face each other in the radial direction with the knob 4 interposed therebetween. The knob supporters 1e and 1f prevent deformation or damage of the knob 4 by making it difficult for an excessive force to be directly applied to the knob 4 in a case where the in-vehicle device 91 is accidentally dropped, for example.

Meanwhile, in a portion corresponding to the knob 4 in the peripheral shape of the knob 4, a boundary portion LN1 indicating a boundary surface separating the first housing 1 and the second housing 2 is set to bend rather than to be a straight line extending vertically in FIG. 6A that is a left side view. The boundary portion LN1 is a narrow gap and is indicated by the solid line in FIGS. 6A and 6B. Specifically, as illustrated in FIG. 6A, the positions of both end portions (upper end portion and lower end portion) of the boundary portion LN1 in the width direction orthogonal to the axis CL in the second housing 2 are at a position P1 and a position P2 on the rear side of the axis CL of the knob 4, respectively. In addition, the boundary portion LN1 extends downward and upward from the position P1 and the position P2, and is bent at bending points P1a and P2a to extend toward the axis CL.

In other words, in the first housing and the second housing 2, the rear surfaces of the pair of knob supporters 1e and 1f serve as the boundary portion LN1 in the portions corresponding to the knob 4. When viewed from the direction of the axis CL that is a single axis, the position of the axis CL is on one side (front side) of a line segment LNa connecting the positions (positions P1 and P2) of both end portions of the second housing 2 in the vertical direction orthogonal to the axis CL at the boundary portion LN1 between the second housing 2 and the pair of knob supporters 1e and 1f. The boundary portion LN1 is formed to enter one side of the line segment LNa. In this mode, when the second housing 2 is at the first position, the front surface of the second housing 2 corresponding to knob 4 in the crosswise direction and the rear surfaces of the knob supporters 1e and 1f of the first housing 1 face each other closely.

Therefore, as illustrated in FIG. 6B, the exposure angle range centered on the axis CL in a state in which the second housing 2 slides and the knob 4 is exposed is an exposure angle range θa enlarged in the vertical direction relative to an exposure angle range θ of the knob 4 in a case where the bending points P1a and P2a are not provided. Therefore, as illustrated in FIG. 7, in the in-vehicle device 91, the tightening and loosening of the knob 4 by a thumb FG1 and an index finger FG2, indicated by the arrow DR4, are very easy in the second aspect.

As illustrated in FIGS. 10A, 10B, and 8, the in-vehicle device 91 may have a rib-like protrusion portion 1a1 protruding forward along the edge portion on the lower right side of the base portion 1a of the first housing 1. Specifically, the protrusion portion 1a1 is formed to protrude in a direction away from the axis CL on the opposite side to the panel 22 with respect to the axis CL in the first housing 1. As described above, when the second housing 2 is moved from the first position to the second position, it is necessary to apply a predetermined force to the second housing 2 to move the second housing 2 to the right with respect to the first housing 1 to release the lock, and the protrusion portion 1a1 serves as a finger hook to facilitate the release of the lock.

FIG. 8 is a perspective view for explaining a method of shifting the in-vehicle device 91 from the first aspect to the second aspect. Specifically, as illustrated in FIG. 8, the index finger FG2 is brought into contact with the left end portions of the base body 21 and the panel 22 of the second housing 2 to push them rightward (see the arrow DR5). In addition, the thumb FG1 is placed on the first housing 1 to push it leftward (see the arrow DR6). In that case, since the thumb FG1 can be hooked on the protrusion portion 1a1, a leftward force can be reliably and easily applied to the first housing 1 with the finger.

As described above, in the in-vehicle device 91, since the attachment portion 3 having the attachment plate 3a rotates around the axis CL passing through the first housing 1 with respect to the first housing 1, the vertical direction from the attachment position to the lower end of the housing is short and compact, and the range that blocks the occupant's view is small. The in-vehicle device 91 is capable of mode shift between the first aspect in which the knob 4 for adjustment of the optical axis CLc by rotation in the vertical direction is covered to make it impossible to tighten and loosen the knob 4 and the second aspect in which the knob 4 is exposed to make it possible to tighten and loosen the knob 4. Therefore, there is no possibility that the knob 4 is unintentionally rotated and the direction of the optical axis CLc is changed, and the length of the in-vehicle device 91 in the crosswise direction in the use state is shortened. In addition, since the knob 4 is not visible to an occupant, the design is simplified and the appearance quality is improved.

The respective aspects described in detail above in Example 1 and Example 2 are not limited to the configurations and may be modified without departing from the gist of the embodiment.

The prevention and permission of the rotation of the attachment portions A3 and 3 are not limited to the structure adopting screw tightening and loosening described above. For example, various structures, such as a structure adopting pressing a member with a biasing force of a spring or the like and releasing the pressing and a structure adopting engaging claws by bayonet type ring rotation and releasing the engagement, can be employed.

In the first aspect in which the knobs A4 and 4 are covered with the second housings A2 and 2, the attachment portions A3 and 3 may be rotatable. In this case, it is substantially impossible to directly turn the knobs A4 and 4 with a finger, but the knobs A4 and 4 may be shaped to be engaged with a tool such as a driver or a box wrench, so that the knobs A4 and 4 can be rotated by the tool.

The optical axes ACLc and CLc of the camera units A24 and 23b are desirably orthogonal to the axes ACL and CL that are also rotation axes of the attachment portions A3 and 3.

FIG. 12 is a schematic side view illustrating an attachment aspect of the in-vehicle device 90. Specifically, FIG. 12 is a schematic view illustrating a state in which the in-vehicle device 90 is attached to the vehicle member G (windshield G). In the postures of the in-vehicle device 90 in the vertical and front-to-rear directions illustrated in FIG. 2A, in a case where the distance in the vertical direction from the position of the axis ACL to the upper end of the second housing A2 is defined as a distance D1 and the distance in the vertical direction from the position of the axis ACL to the lower end is defined as a distance D2 as illustrated in FIG. 12, a distance D3 from the position of the axis ACL to the attachment plate A3a of the attachment portion A3 is desirably set to be longer than the distance D1. More desirably, the axis ACL is at the center position of the second housing A2 in the vertical direction. Specifically, it is more desirable that the distance D1 and the distance D2 be equal in FIG. 12. In addition, the optical axis ACLc is desirably orthogonal to and intersects with the axis ACL. In addition, in FIG. 12, in a case where the horizontal distance from the axis ACL to the tip end of the protrusion portion A2a of the second housing A2 is defined as a distance D4 and the horizontal distance from the axis ACL to the rear end of the second housing A2 is defined as a distance D5, the distance D3 is desirably set to be longer than the distance D5. In addition, the distance D4 and the distance D5 may not be equal, but are more desirably equal. These relationships also apply to the in-vehicle device 91.

The camera unit A24 may be at a position shifted so as not to interfere with the attachment plate A3a in the crosswise direction as illustrated in FIG. 1A. In other words, the positions in the crosswise direction and shapes of the attachment plate A3a and the camera unit A24 may be set so that the attachment plate A3a does not fall within the imaging range of the camera unit A24 even if the attachment plate A3a is relatively rotated to any position. The same applies to the in-vehicle device 91.

The knob supporters A1e and A1f may not be arranged to face each other while being separated by 180° in the circumferential direction, and the separation angle is arbitrary.

The in-vehicle devices 90 and 91 are not limited to the drive recorder provided as an example. The embodiment is applicable to a device that is attached to the inside of a vehicle window and used by adjusting an angle of a housing. For example, the present embodiment is applicable to display devices including an image display portion that displays an image so that an occupant can visually recognize the image on the rear surface of the panel A22 or 22, sound devices including a sound emission portion that emits sound to the rear with narrow directivity on the panel A22 or 22, measurement devices including a sensor that measures an occupant's body temperature on the rear surface of the panel A22 or 22, and the like.

### INDUSTRIAL APPLICABILITY

According to the embodiment, it is possible to provide an in-vehicle device with a small range that blocks an occupant's view.

## Claims

1. An in-vehicle device comprising:
an attachment portion having an attachment plate;
a first housing configured to rotatably support the attachment portion around a single axis;
a knob configured to sandwich the attachment portion between the knob and the first housing and prevent the attachment portion from rotating with respect to the first housing; and
a second housing configured to move with respect to the first housing between a first position at which the knob is covered and a second position at which the knob is exposed.

2. The in-vehicle device according to claim 1, wherein the first housing has a pair of knob supporters extending in a direction of the single axis in proximity along the knob at positions facing each other in a radial direction with the knob interposed therebetween.

3. The in-vehicle device according to claim 2, wherein
a boundary portion that separates the second housing and the first housing is formed between a portion corresponding to the knob in the second housing and the pair of knob supporters in the first housing,
when viewed from the direction of the single axis, a position of the single axis is on one side of a line segment connecting positions of both end portions of the second housing in a width direction orthogonal to the single axis at the boundary portion, and
the boundary portion is formed to enter the one side of the line segment.

4. The in-vehicle device according to claim 1, wherein
the second housing has a panel that covers the knob at the first position, and
the first housing has a protrusion portion protruding in a direction away from the single axis on an opposite side to the panel of the second housing with respect to the single axis.

5. The in-vehicle device according to any one of claims 1 to 4, which is a drive recorder including a camera portion having an optical axis orthogonal to the single axis in the second housing.
